Europäisches Patentamt

European Patent Office

Office européen des brevets

(19)

(11) Publication number: **0 076 162**
**B1**

(12) EUROPEAN PATENT SPECIFICATION

(45) Date of publication of patent specification: **11.09.85**

(51) Int. Cl.⁴: **C 08 F 212/12, C 08 L 25/16**

(21) Application number: **82305161.0**

(22) Date of filing: **29.09.82**

(54) A process for producing a thermoplastic resin and a resin composition containing the same.

(30) Priority: **29.09.81 JP 154150/81**

(43) Date of publication of application:
**06.04.83 Bulletin 83/14**

(45) Publication of the grant of the patent:
**11.09.85 Bulletin 85/37**

(84) Designated Contracting States:
**DE GB IT NL**

(56) References cited:
**DE-A-2 036 420**
**GB-A-2 050 391**

(73) Proprietor: **JAPAN SYNTHETIC RUBBER CO., LTD.**
**11-24, Tsukiji-2-chome Chuo-ku**
**Tokyo (JP)**

(72) Inventor: **Abe, Mitsuo**
**1642-48, Ikuwacho**
**Yokkaichi-shi (JP)**
Inventor: **Tsuchikawa Syuji**
**10-1 Mitakidai 1-chome**
**Yokkaichi-shi, Mie-ken (JP)**
Inventor: **Fukuta, Teizo**
**15-13, Mitakidai-2-chome**
**Yokkaichi-shi (JP)**
Inventor: **Asakawa Tsugio**
**2666-3, Ejimacho**
**Suzuka-shi (JP)**

(74) Representative: **Tubby, David George et al**
**MARKS & CLERK 57-60 Lincoln's Inn Fields**
**London WC2A 3LS (GB)**

Courier Press, Leamington Spa, England.

**0 076 162**

## Description

This invention relates to a novel process for producing a thermoplastic resin having excellent thermal stability and a high heat resistance and comprising the four constituents, α-methylstyrene, methyl methacrylate, acrylonitrile and an aromatic alkenyl compound (e.g. styrene), and also to a resin composition having excellent thermal stability, a high heat resistance and a high impact strength and containing said thermoplastic resin.

One way of improving the heat resistance of styrene/acrylonitrile copolymers is to substitute α-methylstyrene for all or part of the styrene. Also, to improve the heat resistance of a rubber-modified thermoplastic resin, such as an ABS (acrylonitrile/butadiene/styrene) resin, α-methylstyrene has been used as part of the grafting monomer or an α-methylstyrene/acrylonitrile copolymer has been mixed with an acrylonitrile/butadiene/styrene copolymer. Although the thermoplastic resin produced by either of these methods has been used as an interior finishing material in automobiles, electronic devices and domestic electrical appliances, the problem of heat distortion has arisen when these materials are used at high ambient temperatures. Moreover, when a large shaped article is to be produced by injection moulding, it is necessary to conduct the injection moulding at high temperatures, and, at that time, it is particularly required that the resin should be highly heat-stable. The conventional thermoplastic resins mentioned above have not satisfactorily solved such problems. Thus, in order to enhance further the heat resistance of such resins, there have been proposed resin compositions comprising an α-methylstyrene/methyl methacrylate/acrylonitrile copolymer (Japanese Patent Publication No. 33304/70 and U.S. Patent No. 3,463,833). However, when producing a terpolymer of α-methylstyrene, methyl methacrylate and acrylonitrile, it is difficult to copolymerize these three monomers uniformly because of their different reactivities. In particular, α-methylstyrene has a low reactivity and hence its proportion remaining unreacted increases as the copolymerization proceeds. Accordingly, the polymer formed in the later stages of the copolymerization contains many α-methylstyrene chains in its molecule, thus giving a composition having poor thermal stability.

We have now discovered that the thermal stability of a resin comprising a large number of highly heat-resistant α-methylstyrene/methyl methacrylate copolymer chains may be improved by the addition of certain monomer mixtures during polymerization, and then continuing the polymerization.

According to this invention, there is provided a process for producing a thermoplastic resin by copolymerizing α-methylstyrene, methyl methacrylate, acrylonitrile and an alkenyl aromatic compound which is styrene, a ring-halogenated styrene or a vinyltoluene, characterised in that it comprises the steps:

(i) initiating the polymerization of from 65 to 85 parts by weight of a monomer mixture (A) consisting of from 50 to 85% by weight of α-methylstyrene, from 3 to 20% by weight of methyl methacrylate, from 2 to 20% by weight of acrylonitrile and from 0 to 25% by weight of said alkenyl aromatic compound;

(ii) thereafter, continuously or intermittently adding to the polymerization system, in the course of the polymerization, from 2 to 15 parts by weight of a monomer (B) consisting of acrylonitrile or a mixture thereof containing no more than 50% by weight of said alkenyl aromatic compound, and continuing the polymerization; and

(iii) thereafter, adding from 5 to 25 parts by weight of a monomer (C) consisting of said alkenyl aromatic compound or a mixture thereof containing no more than 30% by weight of acrylonitrile, and completing the polymerization,
the total of monomers (A), (B) and (C) being 100 parts by weight.

The thermoplastic resin obtained by this process has excellent thermal stability and heat resistance, compared with analogous resins obtainable by the prior art. A thermoplastic resin composition having excellent thermal stability, a high heat resistance and a high impact strength can be prepared by mixing this thermoplastic resin with another resin reinforced with a diene rubbery polymer, for example, with an ABS resin.

Thus, this invention also provides a thermoplastic resin composition which comprises a mixture of a thermoplastic resin obtained by the above-mentioned process with a graft copolymer obtained by grafting from 60 to 30 parts by weight of a monomer mixture comprising from 65 to 80% by weight of an aromatic alkenyl compound and from 35 to 20% by weight of acrylonitrile on from 40 to 70 parts by weight of a diene rubbery polymer, in such a proportion that the composition contains from 10 to 30% by weight of the rubbery polymer.

In the process for producing a thermoplastic resin in accordance with this invention, it is especially important to prevent the α-methylstyrene and α-methylstyrene/methyl methacrylate chains from becoming too long, and to incorporate these chains, so fas as possible, within a range which does not adversely affect thermal stability. For this purpose, a monomer (C) consisting of said alkenyl aromatic compound (other than α-methylstyrene) or a mixture thereof with acrylonitrile is added to the polymerization system in the latter half stage of polymerization to complete the polymerization, because control of the polymerization at a high polymerization conversion becomes difficult, and this improves the thermal stability.

Moreover, when polymerizing a monomer mixture of 50% by weight or more of α-methylstyrene with methyl methacrylate, acrylonitrile and said alkenyl aromatic compound (other than methylstyrene), the proportion of α-methylstyrene remaining in the unreacted monomers increases and polymer chains having infereior thermal stability tend to be produced as the polymerization proceeds. Accordingly, in this

2

invention, after the polymerization of from 65 to 85 parts by weight of the monomer mixture (A), consisting of from 50 to 85% by weight of α-methylstyrene, from 3 to 20% by weight of methyl methacrylate, from 2 to 20% by weight of acrylonitrile and from 0 to 25% by weight of said alkenyl aromatic compound, has been started, from 2 to 15 parts by weight of the monomer (B), consisting of acrylonitrile or a mixture thereof with said alkenyl aromatic compound, is added continuously or intermittently to the polymerization system in the course of polymerization, preferably when the polymerization conversion has reached a value from 10 to 50%, thereby improving the thermal stability of the polymer. If the α-methylstyrene content in the monomer mixture (A) at the start of polymerization is less than 50% by weight, the heat resistance of the polymer becomes undesirably low. If it exceeds 85% by weight, it is difficult to obtain a resin having good thermal stability. If the methyl methacrylate content is less than 3% by weight, the heat resistance is also too low; if it is more than 20% by weight, the thermal stability deteriorates. The methyl methacrylate serves to increase the polymerization rate, giving not only a higher polymerization conversion but also a higher molecular weight than where no methyl methacrylate is used, and the resulting resin has excellent mechanical properties. If the acrylonitrile content is less than 2% by weight, the impact strength becomes low; if it is more than 20% by weight, the heat resistance becomes low and the colour tone of moulded products made from the resin may be inferior. If the content of said alkenyl aromatic compound exceeds 25% by weight, the heat resistance becomes low. When the mixture (A) of these monomers is used in an amount less than 65 parts by weight, the heat resistance also becomes low; when this amount exceeds 85 parts by weight, the thermal stability becomes low. As mentioned above, the monomer (B), consisting of acrylonitrile or a mixture thereof with said alkenyl aromatic compound (the content of alkenyl aromatic compound in the mixture is up to 50% by weight), is added continuously or intermittently in an amount of from 2 to 15 parts by weight in the course of polymerization. If this amount is less than 2 parts by weight, no effect of the addition is observed. If it exceeds 15 parts by weight, the heat resistance becomes low. After the addition of the monomer (B), the monomer (C), consisting of said alkenyl aromatic compound, or a mixture of a major amount thereof with a minor amount of acrylonitrile (the acrylonitrile content in the mixture is up to 30% by weight), is added, as mentioned above, in an amount of from 5 to 25 parts by weight. If this amount exceeds 25 parts by weight, the heat resistance becomes low; if it is less than 5 parts by weight, no improvement in the thermal stability is observed. The monomer (C) is preferably added when the polymerization conversion based on the monomers (A) and (B) reaches 60% or more, more preferably 70% or more.

The total amount of monomers (A), (B) and (C) is 100 parts by weight.

In the polymerization process of this invention, it is desirable to add the acrylonitrile in such a way that the total amount of acrylonitrile added and acrylonitrile remaining unreacted in the polymerization system at the time of the addition does not exceed 40% by weight based on the total weight of all the monomers remaining unreacted at that time in the polymerization system.

Alkenyl aromatic compounds which may be used in the production of the thermoplastic resin include styrene, ring-halogenated styrenes and the vinyltoluenes, e.g. p-methylstyrene, of which styrene is particularly preferred.

Graft copolymers suitable for mixing with the thermoplastic resin of the present invention are obtained by the graft polymerization of from 60 to 30 parts by weight of a monomer mixture consisting of from 65 to 80% by weight of an aromatic alkenyl compound and from 35 to 20% by weight of acrylonitrile on from 40 to 70 parts by weight of a diene rubbery polymer. Examples of such diene rubbery polymers include polybutadiene, butadiene/styrene copolymers, polyisoprene or polychloroprene, singly or in admixture of any two or more. For the aromatic alkenyl compound, styrene is preferred although α-methylstyrene, p-methylstyrene and other vinyltoluenes are also usable. In addition to the acrylonitrile and the aromatic alkenyl compounds, other alkenyl compounds copolymerizable therewith such as alkyl acrylates and methacrylates (for example, methyl methacrylate or methyl acrylate) may also be used in small amounts. The graft polymer thus obtained has a high rubber component content and can, accordingly, be blended with a large quantity of the highly heat resistant thermoplastic resin of this invention. A thermoplastic resin composition having superior heat resistance and impact strength and having good thermal stability can be obtained by mixing the graft polymer with the thermoplastic resin so that the composition contains from 10 to 30% by weight of the diene rubbery polymer. It is also possible to include in the composition a styreneacrylonitrile resin (AS resin), which enable one to prepare a resin composition having any balance of flow property, heat resistance and impact strength. When the above-mentioned specific graft polymer is mixed with the above α-methylstyrene/methyl methacrylate/acrylonitrile/styrene copolymer resin, good results are obtained, and it may, of course, also be mixed with a variety of conventional rubber-reinforced resins, for example, ABS resins, graft copolymers of acrylonitrile and styrene on an olefin rubber or graft copolymers of acrylonitrile and styrene on an acrylic rubber, to improve its heat resistance.

The above thermoplastic resin and graft copolymer are preferably produced by emulsion polymerization. Emulsifiers which may be used in this emulsion polymerization process are preferably anionic surfactants, for example: potassium or sodium salts of higher fatty acids such as lauric acid, stearic acid and oleic acid; alkali metal salts of alkylbenzenesulphonic acids; alkali metal salts of sulphates of higher alcohols; and salts of disproportionated rosin acid. These emulsifiers may be used singly or in admixture of any two or more thereof. A polymerization catalyst may be used in the emulsion polymerization, for example a persulphate or a redox catalyst, which is a combination of an organic peroxide (e.g. cumene hydroperoxide, diisopropylbenzene hydroperoxide or *p*-methane hydroperoxide) with a reducing agent (e.g. a sugar-containing pyrophosphate formulation or a sulphoxylate formulation). In addition, it is also possible to use a molecular-weight regulator, a polymerization stabilizer, and similar additives commonly used in emulsion polymerization.

The thermoplastic resin and the graft copolymer may be mixed in the latex form, coagulated and then dried or they may be separately coagulated and dried, after which the resulting powders or pellets are mixed. The mixing ratio may vary depending upon the respective compositions and the intended use of the product, although it is preferred to mix the two so that the composition contains from 10 to 30% by weight of the diene rubbery polymer. If the content of the diene rubbery polymer is less than 10% by weight, the impact strength of the composition is unsatisfactory; it if exceeds 30% by weight, the stiffness becomes low. When mixing or pelletizing two two, there may be added stabilizers (e.g. of the bisphenol type, the phenol type or the phosphorus type), lubricants (such as amide compounds, salts or esters of carboxylic acids, silicon compounds or waxes), pigments, fillers, and other conventional additives.

Resin foams having excellent heat resistance can also be obtained from the thermoplastic resin composition by using a known foaming agent, such as azodicarbonamide, dinitrosopentamethylene-tetramine, benzenesulphonylsemicarbazide, toluenesulphonylsemicarbazide, toluenesulphonylhydrazide, benzenesulphonylhydrazide, 4,4'-oxybis(benzenesulphonylhydrazide) or azobisisobutyronitrile.

The invention is further illustrated by the following Examples. In the Examples and Comparative Examples, parts and percentrages are by weight unless otherwise specified.

### Example 1
Preparation of α-methylstyrene/methyl methacrylate/acrylonitrile/styrene quadripolymer

Into a reactor provided with a stirrer and purged with nitrogen were charged 180 parts of ion-exchanged water, 1.8 parts of potassium stearate, a monomer mixture (A) of α-methylstyrene, methyl methacrylate, acrylonitrile and styrene in the proportions shown in Table 1, and 0.3 part of t-dodecyl mercaptan, and the resulting mixture was emulsified. The temperature of the resulting emulsion was raised to 40°C, while the emulsion was stirred under a stream of nitrogen. A solution of 0.16 parts of sodium formaldehydesulphoxylate, 0.08 part of sodium ethylenediaminetetraacetate, and 0.003 part of ferrous sulphate in 16 parts of ion-exchanged water was then added, after which 0.25 part of cumene hydroperoxide was added to initiate the polymerization. The polymerization was continued for 1 hour while controlling the reactor jacket temperature at 60°C, and then monomer (B) which consisted of acrylonitrile or a mixture thereof with styrene (as shown in Table 1), was continuously added over 2 hours. Thereafter, monomer (C) which consisted of styrene or a mixture thereof with acrylonitrile (as shown in Table 1), 20 parts of ion-exchanged water, 0.2 part of potassium stearate and 0.1 part of t-dodecyl mercaptan were added in an emulsion. Further, a solution of 0.04 part of sodium formaldehydesulphoxylate, 0.02 part of sodium ethylenediaminetetraacetate and 0.002 part of ferrous sulphate in 4 parts of ion-exchanged water was added, followed by 0.05 part of cumene hydroperoxide, after which the polymerization was continued for 2 hours.

The resulting copolymer latex was coagulated by adding calcium chloride; it was then separated, washed with water and dried, to give a resin powder. This was pelletized and moulded into test specimens using an injection machine, the cylinder temperature of which was set to 230°C or 280°C, and the Vicat softening temperatures were measured.

### Comparative Example 1
A monomer mixture having the same composition as each sample in Example 1 was prepared by adding monomer (B) and monomer (C) to monomer (A), these being the same as in Examle 1, and charging the monomer mixture, together with 200 parts of ion-exchanged water, 2.0 parts of potassium stearate and 0.4 part of t-dodecyl mercaptan into a reactor provided with a stirrer and purged with nitrogen, after which the temperature of the contents was elevated to 40°C, while stirring under a stream of nitrogen. A solution of 0.2 part of sodium formaldehydesulphoxylate, 0.1 part of sodium ethylenediaminetetraacetate and 0.005 part of ferrous sulphate in 20 parts of ion-exchanged water was added, followed by 0.3 part of cumene hydroperoxide to initiate the polymerization, which was continued for 4 hours. Results of the same treatments of the resulting resin latexes as in Example 1 are shown in Table 2.

### Comparative Example 2
A monomer mixture prepared by adding the same monomer (B) to the same monomer mixture (A) as in Example 1 was charged, together with 180 parts of ion-exchanged water, 1.8 parts of potassium stearate and 0.3 part of t-dodecyl mercaptan into a reactor equipped with a stirrer and purged with nitrogen. The temperature of the mixture was raised to 40°C, while the mixture was stirred under a stream of nitrogen. A solution of 0.16 part of sodium formaldehydesulphoxylate, 0.08 part of sodium ethylenediaminetetraacetate and 0.003 part of ferrous sulphate in 16 parts of ion-exchanged water was then added, followed by 0.25 part of cumene hydroperoxide to initiate the polymerization. After continuing the polymerization for 3 hours, while controlling the reactor jacket temperature at 60°C, the same monomer (C) as was used in Example 1 was added in the form of an emulsion in a mixture of 20 parts of ion-exchanged water, 0.2 part of potassium laurate and 0.1 part of t-dodecyl mercaptan. A solution of 0.04 part of sodium formaldehydesulphoxylate, 0.02 part of sodium ethylenediaminetetraacetate and 0.002 part of ferrous sulphate in 4 parts of ion-exchanged water was then added, followed by 0.05 part of cumene hydroperoxide. The resulting mixture was polymerized for 2 hours. Results of the same treatments of the resulting resin latexes as in Example 1 are shown in Table 3.

From the results shown in Tables 1, 2, and 3, it is evident that the polymerization process of this invention give copolymer resins having both high heat resistance and good thermal stability. As shown in Table 2, the one-step polymerization process of Comparative Example 1 does not give a resin of high heat resistance. As shown in Table 3, the two-step polymerization of Comparative Example 2, which was adopted to improve this aspect, gives resins of high heat resistance, which have, however, inferior thermal stability in high temperature moulding, and hence the heat resistance is greatly reduced. The cause of this is considered to be that, in these polymerization systems wherein α-methylstyrene and methyl methacrylate are used in high proportions, the concentrations of other comonomeric alkenyl compounds, i.e. acrylontrile and styrene, decrease considerably in the later stages of the polymerization and polymer fractions which are liable to be thermally decomposed are produced. This indicates that it is essential to supply these alkenyl monomers continuously or intermittently as in this invention.

TABLE 1 (Example 1)

| Run No. | | 1—1X | 1—2X | 1—3X | 1—4X | 1—5X | 1—6X | 1—7X | 1—8X | 1—9X |
|---|---|---|---|---|---|---|---|---|---|---|
| Monomer mixture (A) | AMS (%) | 55 | 60 | 65 | 75 | 75 | 75 | 80 | 8 0 | 85 |
| | MMA ( ,, ) | 20 | 15 | 10 | 5 | 5 | 5 | 5 | 5 | 5 |
| | AN ( ,, ) | 2 | 5 | 10 | 20 | 20 | 20 | 15 | 15 | 10 |
| | ST ( ,, ) | 23 | 20 | 15 | 0 | 0 | 0 | 0 | 0 | 0 |
| | Total (parts) | 75 | 7 0 | 8 0 | 65 | 75 | 85 | 80 | 80 | 75 |
| Monomer (B) | AN (parts) | 5 | 5 | 10 | 7 | 10 | 10 | 10 | 5 | 15 |
| | ST ( ,, ) | 0 | 0 | 0 | 8 | 0 | 0 | 0 | 5 | 0 |
| Monomer (C) | AN (%) | 35 | 35 | 3 0 | 2 0 | 15 | 0 | 10 | 20 | 20 |
| | ST ( ,, ) | 65 | 65 | 7 0 | 80 | 85 | 100 | 90 | 80 | 80 |
| | Total (parts) | 20 | 25 | 1 0 | 20 | 15 | 5 | 1 0 | 10 | 10 |
| Vicat softening temperature (°C) | Injection temp. 230°C | 135 | 134 | 139 | 137 | 138 | 140 | 139 | 138 | 140 |
| | 280°C | 13 0 | 131 | 133 | 131 | 133 | 133 | 133 | 133 | 133 |
| | Δt | 5 | 3 | 6 | 6 | 5 | 7 | 6 | 5 | 7 |

Notes:

AMS: $\alpha$-Methylstyrene;

MMA: Methyl methacrylate;

AN: Acrylonitrile;

ST: Styrene;

Vicat softening temperature: Measured in accordance with ASTM D—1525.

(The same abbreviations and method are used hereafter).

TABLE 2 (Comparative Example 1)

| Run No. | | 1–1Y | 1–2Y | 1–3Y | 1–4Y | 1–5Y | 1–6Y | 1–7Y | 1–8Y | 1–9Y |
|---|---|---|---|---|---|---|---|---|---|---|
| Monomer mixture (A)+(B)+(C) | AMS (parts) | 41.25 | 42.0 | 52.0 | 48.75 | 56.25 | 63.75 | 64.0 | 64.0 | 63.75 |
| | MMA ( ,, ) | 15 | 10.5 | 8.0 | 3.25 | 3.75 | 4.25 | 4.0 | 4.0 | 3.75 |
| | AN ( ,, ) | 13.5 | 17.25 | 21.0 | 24.0 | 27.25 | 27.0 | 23.0 | 19.0 | 24.5 |
| | ST ( ,, ) | 30.25 | 30.25 | 19.0 | 24.0 | 12.75 | 5 | 9 | 13.0 | 8.0 |
| Vicat softening temperature (°C) | Injection temp. 230°C | 123 | 120 | 124 | 122 | 124 | 128 | 127 | 124 | 126 |
| | 280°C | 117 | 115 | 118 | 115 | 116 | 120 | 120 | 118 | 116 |
| | $\Delta t$ | 6 | 5 | 6 | 7 | 8 | 8 | 7 | 6 | 10 |

0 076 162

TABLE 3 (Comparative Example 2)

| Run No. | | 2—1Y | 2—2Y | 2—3Y | 2—4Y | 2—5Y | 2—6Y | 2—7Y | 2—8Y | 2—9Y |
|---|---|---|---|---|---|---|---|---|---|---|
| Monomer mixture (A)₁(B) | AMS (parts) | 41.25 | 42.0 | 52.0 | 48.75 | 56.25 | 63.75 | 64.0 | 64.0 | 63.75 |
| | MMA ( ,, ) | 15 | 10.5 | 8.0 | 3.25 | 3.75 | 4.25 | 4.0 | 4.0 | 3.75 |
| | AN ( ,, ) | 6.5 | 8.5 | 18.0 | 20.0 | 25.0 | 27.0 | 22.0 | 17.0 | 22.5 |
| | ST ( ,, ) | 17.25 | 14.0 | 12.0 | 8 | 0 | 0 | 0 | 5 | 0 |
| Monomer (C) | AN (%) | 35 | 35 | 30 | 20 | 15 | 0 | 10 | 20 | 20 |
| | ST (,,) | 65 | 65 | 70 | 80 | 85 | 100 | 90 | 80 | 80 |
| | Total (parts) | 20 | 25 | 10 | 20 | 15 | 5 | 10 | 10 | 10 |
| Vicat softening temperature (°C) | Injection temp. 230°C | 133 | 133 | 136 | 137 | 136 | 140 | 137 | 136 | 139 |
| | 280°C | 120 | 119 | 122 | 122 | 122 | 125 | 122 | 124 | 125 |
| | Δt | 13 | 14 | 14 | 15 | 14 | 15 | 15 | 12 | 14 |

8

0 076 162

Example 2

Preparation of graft copolymer

One third of an emulsion (a) consisting of 60 parts of ion-exchanged water, 28 parts of styrene, 12 parts of acrylonitrile, 1 part of potassium stearate and 0.2 part of t-dodecyl mercaptan; 80 parts of ion-exchanged water; and 60 parts (as solids) of a polybutadiene latex were charged and emulsified in a reactor equipped with a stirrer and purged with nitrogen. The temperature of the emulsified mixture was raised to 40°C, while the emulsion was stirred under a stream of nitrogen. A solution of 0.2 part of sodium pyrophosphate, 0.4 part of glucose and 0.01 part of ferrous sulphate in 20 parts of ion-exchanged water, followed by 0.1 part of cumene hydroperoxide, was added and the reaction was carried out for 1 hour, while keeping the reactor jacket temperature at 70°C. The rest of the monomer emulsion (a) and 0.1 part of cumene hydroperoxide were then continuously fed to the reactor over 3 hours, after which a solution of 0.05 part of sodium pyrophosphate, 0.1 part of glucose and 0.0025 part of ferrous sulphate in 5 parts of ion-exchanged water, followed by 0.025 part of cumene hydroperoxide, was added and the polymerization was continued for a further 1 hour to completion.

(ii) Preparation of resin composition

Each of the copolymers prepared in Example 1 and Comparative Examples 1 and 2 was mixed with the above graft copolymer, both in the latex form, at a solid weight ratio of 67:35 (each resulting composition contained about 20% of the diene rubbery polymer). An antioxidant was added and then the mixture was coagulated using calcium chloride. The coagulum was filtered, washed and dried to give a resin powder. The resin powder thus prepared was pelletized and moulded into test specimens using an injection machine at a cylinder temperature of 230°C. Results of measuring the physical properties of these specimens are shown in Table 4. The Vicat softening temperature was also measured on specimens injection-moulded at a cylinder temperature of 280°C.

TABLE 4

| Run No. | 2—1 | 2—2 | 2—3 | 2—4 | 2—5 | 2—6 | 2—7 | 2—8 | 2—9 |
|---|---|---|---|---|---|---|---|---|---|
| Copolymer sample No. | 1—2X | 1—5X | 1—7X | 1—2Y | 1—5Y | 1—7Y | 2—2Y | 2—5Y | 2—7Y |
| Izod impact (Kg.cm/cm) | 14 | 19 | 15 | 16 | 20 | 14 | 13 | 18 | 16 |
| Tensile yield (Kg/cm) | 463 | 482 | 426 | 448 | 477 | 416 | 458 | 485 | 420 |
| Elongation at break (%) | 48 | 36 | 40 | 43 | 38 | 42 | 41 | 40 | 39 |
| Vicat softening temp. of specimen injected at 230°C (°C) | 130 | 132 | 133 | 117 | 118 | 120 | 128 | 132 | 135 |
| at 280°C (°C) | 129 | 130 | 131 | 117 | 117 | 118 | 122 | 124 | 125 |
| $\Delta t$ | 1 | 2 | 2 | 0 | 1 | 2 | 6 | 8 | 10 |

Notes: Izod impact (notched):
      Measured in accordance with ASTM D—256 at 23°C.

      Tensille yield and elongation at break:
      Measured in accordance with ASTM D—638.

From Table 4, it is evident that, in the case of the copolymer-graft copolymer compositions as with the copolymers themselves, those prepared from the copolymers of Example 1 have superior heat resistance and thermal stability.

Example 3

Graft copolymers were prepared in the same manner as in Example 2, except that varying amounts of the polybutadiene latex (amounts as solids), styrene and acrylonitrile were used, as shown in Table 5. The graft polymers were each mixed with the copolymer prepared in Example 1, Run 1—7X. Physical properties of the resulting resin compositions were measured in the same fashion as in Example 2. The results are shown in Table 5.

TABLE 5

| Run No. | 3—1 | 3—2 | 3—3 | 3—4 | 3—5 | 3—6 | 3—7 | 3—8 | 3—9 |
|---|---|---|---|---|---|---|---|---|---|
| Copolymer sample No. | 1—7X | 1—7X | 1—7X | 1—7X | 1—7X | 1—7X | 1—7X | 1—7X | 1—7X |
| Mixing proportion (parts) | 33 | 50 | 83 | 67 | 50 | 67 | 67 | 71 | 75 |
| Graft copolymer | | | | | | | | | |
|   Rubber content (%) | 30 | 40 | 60 | 60 | 60 | 60 | 60 | 70 | 80 |
|   Styrene unit content (%) | 49 | 42 | 28 | 28 | 28 | 32 | 26 | 21 | 14 |
|   Acrylonitrile unit content (%) | 21 | 18 | 12 | 12 | 12 | 8 | 14 | 9 | 6 |
| Mixing proportion of graft copolymer (parts) | 67 | 50 | 17 | 33 | 0 | 33 | 33 | 29 | 25 |
| Rubber content in composition (%) | 20 | 20 | 10 | 20 | 30 | 20 | 20 | 20 | 20 |
| Izod impact (Kg.cm/cm) | 23 | 18 | 8 | 15 | 28 | 10 | 19 | 12 | 6 |
| Vicat softening temp. of specimen injected | | | | | | | | | |
|   at 230°C (°C) | 117 | 125 | 135 | 132 | 126 | 131 | 133 | 133 | 136 |
|   at 280°C (°C) | 117 | 124 | 132 | 131 | 125 | 129 | 130 | 130 | 131 |
|   $\Lambda$t | 0 | 1 | 3 | 1 | 1 | 2 | 3 | 3 | 5 |

0 076 162

The balance between the impact strength and the heat resistance depends upon the diene rubbery polymer content in the graft copolymer and upon the mixing proportion of the copolymer resin. As shown in Table 5, when the rubber content in the graft copolymer is less than 40%, the heat resistance is insufficient, whereas when the content exceeds 70%, the impact strength considerably decreases.

### Example 4

Similarly to Example 2, a graft copolymer was prepared by using 40 parts (as solids) of the polybutadiene latex, 43 parts of styrene, 17 parts of acrylonitrile and 0.02 part of t-dodecyl mercaptan. The resulting graft copolymer was mixed with the copolymer prepared in Example 1, Run 1—2X, at different mixing ratios. Results of measuring physical properties of the resulting compositions are shown in Table 6.

### TABLE 6

| Run No. | 4—1 | 4—2 |
|---|---|---|
| Copolymer sample No. | 1—2X | 1—2X |
|    Mixing proportion (parts) | 75 | 50 |
| Graft copolymer | | |
|    Mixing proportion (parts) | 25 | 50 |
|    Intrinsic viscosity of matrix polybutadiene ($[\eta]$) (at 30°C, in MEK) *1 | 0.54 | 0.54 |
|    Grafting degree (%) *2 | 102 | 102 |
| Rubber content in composition (%) | 10 | 20 |
| Izod impact (Kg.cm/cm) | 15 | 30 |
| Vicat softening temp. of specimen injected at 230°C (°C) | 138 | 130 |
|    at 280°C (°C) | 134 | 126 |
| $\Delta t$ | 4 | 4 |

Note:   *1  Methyl ethyl ketone
      *2  (Weight increase after graft polymerization) × 100/(original rubber weight as solids)

As is apparent from Tables 4, 5 and 6, a thermoplastic resin composition having superior impact strength, heat resistance and thermal stability can be obtained by mixing the foregoing graft copolymer with the thermoplastic resin of this invention.

### Claims

1. A process for producing a thermoplastic resin by copolymerizing α-methylstyrene, methyl methacrylate, acrylonitrile and an alkenyl aromatic compound which is styrene, a ring-halogenated styrene or a vinyltoluene, characterised in that it comprises the steps:

(i) initiating the polymerization of from 65 to 85 parts by weight of a monomer mixture (A) consisting of from 50 to 85% by weight of α-methylstyrene, from 3 to 20% by weight of methyl methacrylate, from 2 to 20% by weight of acrylonitrile and from 0 to 25% by weight of said alkenyl aromatic compound;

(ii) thereafter, continuously or intermittently adding to the polymerization system, in the course of the polymerization, from 2 to 15 parts by weight of a monomer (B) consisting of acrylonitrile or a mixture thereof containing no more than 50% by weight of said alkenyl aromatic compound, and continuing the polymerization; and

(iii) thereafter, adding from 5 to 25 parts by weight of a monomer (C) consisting of said alkenyl aro-

13

matic compound or a mixture thereof containing no more than 30% by weight of acrylonitrile, and completing the polymerization,
the total of monomers (A), (B) and (C) being 100 parts by weight.

2. A process according to Claim 1, wherein the monomer (C) is added when the polymerization conversion has reached 60% or more, based on the total of the monomers (A) and (B) used.

3. A process according to Claim 1, wherein the monomer (C) is added when the polymerization conversion has reached 70% or more, based on the total of the monomers (A) and (B) used.

4. A process according to any one of Claims 1 to 3, wherein the monomer (B) is added so that the total maount of acrylonitrile in the monomer (B) and acrylontrile remaining unreacted in the polymerization system at the time of addition does not exceed 40% by weight, based on the total weight of monomers remaining unreacted at that time.

5. A process according to any one of Claims 1 to 4, wherein said alkenyl aromatic compound is styrene.

6. A process according to any one of the preceding Claims, wherein the polymerization is effected by emulsion polymerization.

7. A process according to Claim 6, wherein the emulsifier used is a potassium or sodium salt of a higher fatty acid, an alkali metal salt of an alkylbenzenesulphonic acid, an alkali metal salt of a higher alkyl sulphate or a salt of disproportionated rosin acid.

8. A process according to Claim 6 or Claim 7, wherein the polymerization catalyst used is a persulphate or a redox catalyst which is a combination of an organic peroxide and a reducing agent.

9. A thermoplastic resin composition which comprises a mixture of a thermoplastic resin obtained by the process of any one of Claims 1 to 8 with a graft copolymer obtained by grafting from 60 to 30 parts by weight of a monomer mixture comprising from 65 to 80% by weight of an aromatic alkenyl compound and from 35 to 20% by weight of acrylonitrile on from 40 to 70 parts by weight of a diene rubbery polymer, so that the composition contains from 10 to 30% by weight of the diene rubbery polymer.

10. A composition according to Claim 9, wherein the diene rubbery polymer is polybutadiene, a butadiene/styrene copolymer, polyisoprene, polychloroprene or a mixture of two or more of these polymers.

11. A composition according to Claim 9 or Claim 10, wherein the aromatic alkenyl compound is styrene, α-methylstyrene or vinyltoluene.

12. A composition according to Claim 9 or Claim 10, wherein the aromatic alkenyl compound is styrene.

13. A composition according to any one of Claims 9 to 12, wherein the monomer mixture contains a small amount of an alkyl methacrylate or acrylate.

14. A composition according to any one of Claims 9 to 13, additionally comprising a styrene/acrylontrile copolymer.

### Patentansprüche

1. Verfahren zur Herstellung eines thermoplastischen Kunstharzes durch Copolymerisation von α-Methylstyrol, Methylmethacrylat, Acrylnitril und einer aromatischen Alkenylverbindung, wie Styrol, einem ringhalogenierten Styrol oder einem Vinyltoluol, gekennzeichnet durch die folgenden Stufen:

(i) Initierung der Polymerisation von 65 bis 85 Gewichtsteilen eines Monomergemisches (A) aus von 50 bis 85 Gew.-% α-Methylstyrol, von 3 bis 20 Gew.-% Methylmethacrylat, von 2 bis 20 Gew.-% Acrylnitril und von 0 bis 25 Gew.-% der aromatischen Alkenylverbindung;

(ii) Kontinuierliche oder diskontinuierliche Zugabe zum Polymerisationssystem im Verlauf der Polymerisation von 2 bis 15 Gewichtsteilen eines Monomers (B) aus Acrylnitril oder einem seiner Gemische mit nicht über 50 Gew.-% der aromatischen Alkenylverbindung, und Fortführung der Polymerisation; und

(iii) Zugabe von 5 bis 25 Gewichtsteilen eines Monomers (C) aus der aromatischen Alkenylverbindung oder einem ihrer Gemische mit nicht über 30 Gew.-% an Acrylnitril, und Beendigung der Polymerisation, wobei die Gesamtmenge an Monomere (A), (B) und (C) 100 Gewichsteile ausmacht.

2. Verfahren nach Anspruch 1, gekennzeichnet durch die Zugabe des Monomers (C) bei Erreichung einer Polymerisationsumwandlung von 60% oder darüber, bezogen auf die Gesamtmenge an verwendeten Monomeren (A) und (B).

3. Verfahren nach Anspruch 1, gekennzeichnet durch die Zugabe des Monomers (C) bei Erreichung einer Polymerisationsumwandlung von 70% oder darüber, bezogen auf die Gesamtmenge an verwendeten Monomeren (A) und (B).

4. Verfahren nach einem der Ansprüche 1 bis 3, dadurch gekennzeichnet, daß das Monomer (B) so zugegeben wird, daß die Gesamtmenge an Acrylnitril im Monomer (B) und an nicht umgesetzten Acrylnitril im Polymerisationssystem zum Zeitpunkt der Zugabe 40 Gew.-% nicht übersteigt, bezogen auf das Gesamtgewicht der zu dieser Zeit nicht umgesetzten Monomere.

5. Verfahren nach einem der Ansprüche 1 bis 4, dadurch gekennzeichnet, daß die aromatische Alkenylverbindung Styrol ist.

6. Verfahren nach einem der vorstehenden Ansprüche, dadurch gekennzeichnet, daß die Polymerisation durch Emulsionspolymerisation durchgeführt wird.

7. Verfahren nach Anspruch 6, dadurch gekennzeichnet, daß das verwendete Emulgiermittel ein Kalium- oder Natriumsalz einer höheren Fettsäure, ein Alkalimetallsalz einer Alkylbenzolsulfonsäure, ein Alkalimetallsalz eines höheren Alkylsulfats oder ein Salz einer disproportionierten Harzsäure ist.

8. Verfahren nach Anspruch 6 oder 7, dadurch gekennzeichnet, daß der verwendete Polymerisationskatalysator ein Persulfat oder ein Redoxkatalysator aus einer Kombination eines organischen Peroxids und eines Reduktionsmittels ist.

9. Thermoplastische Kunstharzzusammensetzung, gekennzeichnet durch ein solches Gemisch eines gemäß einem der Ansprüche 1 bis 8 erhaltenen thermoplastischen Kunstharzes und eines Pfropfcopolymers, erhalten durch Pfropfen von 60 bis 30 Gewichtsteilen eines Monomergemisches aus 65 bis 80 Gew.-% einer aromatischen Alkenylverbindung und 35 bis 20 Gew.-% Acrylnitril auf von 40 bis 70 Gewichtsteilen eines kautschukartigen Dienpolymers, daß die Zusammensetzung 10 bis 30 Gew.-% des kautschukartigen Dienpolymers enthält.

10. Zusammensetzung nach Ansprüch 9, dadurch gekennzeichnet, daß das kautschukartige Dienpolymer Polybutadien, ein Butadien/Styrol-Copolymer, Polyisopren, Polychloropren oder ein Gemisch zweier oder mehr dieser Polymere ist.

11. Zusammensetzung nach Ansprüche 9 oder 10, dadurch gekennzeichnet, daß die aromatische Alkenylverbindung Styrol, Methylstyrol oder Vinyltoluol ist.

12. Zusammensetzung nach Ansprüche 9 oder 10, dadurch gekennzeichnet, daß die aromatische Alkenylverbindung Styrol ist.

13. Zusammensetzung nach einem der Ansprüche 9 bis 12, dadurch gekennzeichnet, daß das Monomergemisch einen geringe Menge eines Alkylmethacrylats oder -acrylats enthält.

14. Zusammensetzung nach einem der Ansprüche 9 bis 13, dadurch gekennzeichnet, daß sie zusätzlich noch ein Styrol/Acrylnitril-Copolymer enthält.

**Revendications**

1. Procédé de production d'une résine thermoplastique par copolymérisation d'α-méthylstyrène, de méthacrylate de méthyle, d'acrylonitrile et d'un composé aromatique alcénylique qui est le styrène, un styrène halogéné sur le noyau ou un vinyltoluène, caractérisé en ce qu'il comprend les étapes consistant:

i) à amorcer la polymérisation de 65 à 85 parties en poids d'un mélange de monomères (A) consistant en 50 à 85% en poids d'α-méthylstyrène, de 3 à 20% en poids de méthacrylate de méthyle, de 2 à 20% en poids d'acylonitrile et de 0 à 25% en poids dudit composé aromatique alcénylique;

ii) puis à ajouter continuellement ou par intermittence au système de polymérisation, au cours de la polymérisation, de 2 à 15 parties en poids d'un monomère (B) consistant en acrylonitrile ou en un mélange de celui-ci ne contenant pas plus de 50% en poids dudit composé aromatique alcénylique, et à poursuivre la polymérisation; et

iii) puis à ajouter de 5 à 25 parties en poids d'un monomère (C) consistant en ledit composé aromatique alcénylique ou en un mélange de celui-ci ne contenant pas plus de 30% en poids d'acrylonitrile, et à achever la polymérisation,

le total des monomères (A), (B) et (C) faisant 100 parties en poids.

2. Procédé selon la revendication 1, dans lequel on ajoute le monomère (C) quand le taux de polymérisation a atteint 60% ou plus, par rapport au total des monomères (A) et (B) utilisés.

3. Procédé selon la revendication 1, dans lequel on ajoute le monomère (C) quand le taux de polymérisation a atteint 70% ou plus, par rapport au total des monomères (A) et (B) utilisés.

4. Procédé selon l'une quelconque des revendications 1 à 3, dans lequel le monomère (B) est ajouté de telle sorte que la quantité totale d'acrylonitrile dans le monomère (B) et l'acrylonitrile restant n'ayant pas réagi dans le système de polymérisation au moment de l'addition ne dépasse pas 40% en poids, par rapport au poids total de monomères restants n'ayant par réagi à ce moment.

5. Procédé selon l'une quelconque des revendications 1 à 4, dans lequel ledit composé aromatique alcénylique est le styrène.

6. Procédé selon l'une quelconque des revendications précédentes, dans lequel la polymérisation est effectuée par polymérisation en émulsion.

7. Procédé selon la revendication 6, dans lequel l'émulsifiant utilisé est un sel de potassium ou de sodium d'un acide gras supérieur, un sel de métal alcalin d'un acide alkylbenzènesulfonique, un sel de métal alcalin d'un alkylsulfate supérieur ou d'un sel d'acide de colophane dismuté.

8. Procédé selon l'une ou l'autre des revendications 6 et 7, dans lequel le catalyseur de polymérisation utilisé est un persulfate ou un catalyseur redox qui est une combinaison d'un peroxyde organique et d'un agent réducteur.

9. Composition de résine thermoplastique qui comprend un mélange d'une résine thermoplastique obtenue par le procédé selon l'une quelconque des revendications 1 à 8, avec un copolymère greffé obtenu par greffage de 60 à 30 parties en poids d'un mélange de monomères comprenant de 65 à 80% en poids d'un composé aromatique alcénylique et de 35 à 20% en poids d'acrylonitrile sur de 40 à 70 parties en poids d'un polymère caoutchouteux diénique, de sorte que la composition contienne de 10 à 30% en poids du polymère caoutchouteux diénique.

10. Composition selon la revendication 9, dans laquelle le polymère caoutchouteux diénique est le polybutadiène, un copolymère butadiène/styrène, le polyisoprène, le polychloroprène ou un mélange de deux ou plusieurs de ces polymères.

11. Composition selon la revendication 9, dans laquelle le composé aromatique alcénylique est le styrène, l'α-méthylstyrène ou le vinyltoluène.

12. Composition selon l'une ou l'autre des revendications 9 et 10, dans laquelle le composé aromatique alcénylique est le styrène.

13. Composition selon l'une quelconque des revendications 9 à 12, dans laquelle le mélange de monomères contient une petite quantité d'un méthacrylate oun acrylate d'alkyle.

14. Composition selon l'une quelconque des revendications 9 à 13, comprenant en outre un copolymère styrène/acrylonitrile.